# EUROPEAN PATENT SPECIFICATION

(11) **EP 0 850 980 B1**
(45) Date of publication and mention of the grant of the patent: **24.04.2002**
(21) Application number: 97500228.8
(22) Date of filing: 29.12.1997
(51) Int. Cl.: C08J 5/18, C08K 5/00, C08K 3/00, C08L 23/04

(54) **Plastic sheets for solarization**
Kunststoffolien für Solarisation
Feuilles en matière plastique pour solarisation

(30) Priority: 31.12.1996 ES 9602762
(43) Date of publication of application: 01.07.1998
(73) Proprietor: REPSOL QUIMICA S.A., E-28046 Madrid (ES)
(72) Inventor: Espi Guzman, Enrique, 28015 Madrid (ES); Jorge Tapia, Graciano, 28030 Madrid (ES)
(74) Representative: Del Santo Abril, Natividad

(56) References cited:
- CH-A- 513 932
- PATENT ABSTRACTS OF JAPAN vol. 096, no. 006, 28 June 1996 & JP 08 040718 A (ASAHI GLASS CO LTD), 13 February 1996,
- PATENT ABSTRACTS OF JAPAN vol. 017, no. 462 (C-1101), 24 August 1993 & JP 05 112660 A (MITSUBISHI KASEI CORP), 7 May 1993,
- PATENT ABSTRACTS OF JAPAN vol. 009, no. 180 (C-293), 25 July 1985 & JP 60 049047 A (MITSUBISHI KASEI KOGYO KK), 18 March 1985,

## Description

This present invention deals with a special plastic sheet which makes it possible to improve the efficacy of the disinfection of agricultural soils, using the technique known as solarization.

The disinfection of agricultural soils using the solarization method, according to the state of the art, consists of covering the abundantly watered soil with a sheet of transparent plastic, normally during the summer season, when solar radiation is at its highest. The sun heats the wet soil covered with the transparent plastic film to a temperature that permits a reduction of the existing pathogenic germs, to such a degree as to make it possible to refer to disinfection. The time necessary to achieve this effect depends on the climate and the level of contamination in the soil, however it is estimated at approximately two months in a Mediterranean type climate during the summer.

The solarization technique was developed and introduced into the world by Dr J. Katan and his team of colleagues at the University of Jerusalem, in the 80's. As from said date, an extensive bibliography has been published on the technique of soil disinfection by solarization in many countries, including Spain, dealing fundamentally with the efficacy of this technique on several types of soil, climate, plastic sheets and pathogenic germs. Two references considered to be very representative of what has been published on solarization are given below, in order to clarify as well as possible the situation of the state of the art.
- "Soil Solarization", J. Katan and J. E. de Vang. CRC Press, Inc. Boca Raton. Florida, USA. 1991.
- Doctoral Thesis of Dr José Luis Cenis Anadón, and its application in the control of the Meloidgyne Javanica nematode (Trub)" Universidad Politécnica de Madrid, ETSIA, June, 1986.

The solarization technique used to disinfect agricultural soils is a natural and highly ecological method. It eliminates the need for agrochemical products, which are usually highly toxic for the persons who handle them and very contaminating for the environment, both as regards the air and the water of the subsoil. On the other hand, the transparent plastic sheet normally used is low density polyethylene, which is easily recyclable as new material or a source of energy, the latter being more adequate in the case of solarization. Due to its purity and calorific power, polyethylene, as a fuel, may be compared to natural gas.

CH-A-513932 describes transparent hydrophilic plastic sheets containing a nonionic surfactant and a microporous mineral adduct which are useful in the agricultural field for mulching purposes, said sheets being intended to stabilize the temperature of the soil rather than to temporarily increase the soil temperature as occurs in the solarization process.

In spite of these advantages, and the large number of publications on solarization based on research and development programmes, this natural and highly ecological soil disinfection technique is not as widely used as could be hoped. In most agricultural exploitation in Spain and in other countries having an adequate climate for the application of this technique, agrochemical products continue to be used for soils disinfection. We give below a series of technical reasons which probably justify the low use of solarization, in accordance with the state of the art, for soil disinfection.
- Up to two months are needed for disinfection, during which time the soil remains non-productive. Agrochemical products only require a few days.
- In order to reach the necessary temperature in the soil to destroy the pathogenic germs, solarization soil to destroy the pathogenic germs, solarization must be carried out in summer and in warm climates, not always the most convenient time for the agricultural exploitation. This also excludes countries having a milder climate and other seasons of the year.
- Penetrating deeper into the soil, the efficacy of the solarization is reduced, as the temperature reached is lower.
- There is a general idea that the solarization method, according to the state of the art, cannot be trusted to disinfect properly.

According to the studies of Dr J. Katan and colleagues, the efficacy of solarization depends on the temperature of the soil. In the book quoted as reference, Dr J. Katan recommends that plastic manufacturers develop sheets which would permit an increase in the temperature of the soil in the solarization process. This would improve the efficacy of the disinfection, reduce the time of solarization and could even be used in milder climates and times of year other than summer. This is precisely the basis for this present invention which is described below.

When a solarization treatment is observed, it can be seen that the sheet of transparent plastic, normally low density polyethylene, between 15 and 40 micrometers thick, the underside is completely covered with condensed water in the form of spherical drops, which reflect the light like a mirror. Example No. 1 confirms that the amount of spectral solar energy reflected is of around 25% of the incident energy, solar energy which is lost and which could otherwise contribute to the heating of the soil and thus improve the efficacy of the solarization.

Example No. 2 compares the temperature of the soil at several depths between naked soil, soil solarized with a film of normal polyethylene, in accordance with the state of the art, and a third soil solarized with the hydrophilic film of this present invention. It may be seen that the energy lost due to reflection, and made use of by the hydrophilic film of this present invention, is transformed into an increase in the temperature of the soil at all the depths measured. This increase is considered very significant as being close to the levels considered lethal for the greater part of the pathogenic germs existing in the soil.

It is estimated that this increase in the soil temperature obtained with the hydrophilic film of this present invention, must be seen as a greater efficacy of the disinfection of the soil by solarization, understood either as a greater destruction of pathogenic germs in the same time or the same reduction in less time. Examples Nos. 3 and 5, carried out over the summers of 1995 and 1996, respectively, in the Southwest of Spain, show this to be so.

The main characteristic of the transparent hydrophilic films of this present invention is that the prime materials used are polyethylene, ethylene and vinyl acetate copolymers, ethylene and alfaolefin polymers, or mixtures thereof in any proportion, known as conventional or high pressure polyethylene (LDPE), EVA copolymer, lineal polyethylene (LLDPE) and high density polyethylene (HDPE). The quality thereof should be such as to make it possible to manufacture sheets between 12 and 40 micrometers thick by the methods known as blow extrusion or mesh extrusion.

To this prime material is added, by molten mixture, by any of the methods known under the state of the art, between 0.2 and 5%, but preferably between 0.5 and 3%, of a nonionic surfactant, within the chemical species generically defined as esters of fatty acids and polyols, containing one or several functional non esterified or oxyalkylenated "alcohol" groups. Representative examples are sorbitol stearate (mono, di and triester), stearate and distearate glycerine, oxyethylenated ethylenglycol palmitate, etc.

The films or sheets manufactured with these materials are hydrophilic, in other words, the water wets their surface and therefore, the water vapour, in the solarization process, is condensed in the form of a continuous sheet, avoiding the reflection of the solar energy and permitting the increase of the temperature of the soil compared to normal hydrophobic film, as shown in examples 1 and 2.

Examples 2 and 3 show that the duration of the hydrophilic property is very reduced, to the extent that in some cases it is not sufficient to complete the solarization cycle. This is due to the fact that, during the solarization process the water condenses at relatively high temperatures on the underside of the film, hastening the washing and subsequent drawing off of the surfactants.

To resolve this problem and thus make it possible to use the film of this present invention in any circumstance and condition, a micronized, micro-porous inorganic product is used, with an average particle size of between 1 and 10 micrometers, a specific surface of between 2 and 500 m²/g approximately and a volume of pores measured by heptane absorption of between 0.2 and 5 cm³/g approximately. The amount to be added depends on the parameters defined above, but in any case a relation is recommended, regarding the surfactant, of between 0.2 and 2 times, approximately. These micro-porous inorganic products include silica amorphates, diatomite earth, kaolin, several types of natural silicates, alumina, sepiolite, etc.

These micro-porous products absorb the surfactants during the melted mixture time, later acting in the film as dosifiers thereof, prolonging their permanence and thus the hydrophilic property. Example No. 4 compares the duration of the hydrophilic effect, in a laboratory test, in films of this present invention with and without a micro-porous mineral load. Example No. 5 confirms, in a real field test, the greater duration of the hydrophilic effect of the film containing a micro-porous load against example 3, which was carried out without said load.

Apart from these active products, the films of this present invention may contain other additives known under the state of the art of manufacture of polyolefin films, such as antioxidants, antistatic agents, pigments, ultraviolet stabilisers, etc., although they are not strictly necessary for an efficient solarization.

The five above mentioned experiments or examples which confirm the efficacy and good functioning of this present invention are given below:

### Example No. 1

In a double shaft extruder a total of 9 binary compositions were made, consisting in mixtures of each of the three plastic materials defined below, with 3% by weight of an anionic surfactant. The plastic materials used as a base were low density polyethylene (LDPE), ethylene and vinyl acetate copolymer 88/12 (EVA copolymer)and ethylene and butene copolymer (lineal polyethylene or LLDPE). The surfactants were sorbitol monostearate, glycerine monostearate and oxyethylenated sorbitol monostearate. Subsequently, 40 micrometer thick film was made using the blow extrusion method with conventional equipment, with these 9 compositions and the three plastic materials without surfactants.

The films thus obtained were placed for 5 minutes over a water bath at 50°C, thus forming an abundant condensation such as is formed during the solarization process. Subsequently, without leaving time for the condensation to disappear, the spectrum of solar radiation transmission was measured. Said measurements were taken using a spectrophotometer with integrating sphere, to capture both the indirectly transmitted and the refracted energy, and bearing in mind the interval of the electromagnetic spectrum comprised between wavelengths 0.25 and 2.5 micrometers, thus including the areas of ultraviolet, visible and infrared close to the spectrum and, therefore, the greater part of the solar energy received by the surface of the earth.

The three films without surfactants, taken as reference and used normally in the solarization process, in accordance with the state of the art, gave transmission values between 62% and 68% as against values of 90 and 94% for the new films containing any of the mentioned surfactants, according to this present invention.

### Example No. 2

A solarization experience was carried out on agricultural land during the months of July and August in the area of Alcalá de Henares (Madrid). 3 plots of 10m² were taken and, after watering to saturation, were covered as described:
- Plot No. 1 was covered with a plastic sheet 40 micrometers thick manufactured with low density polyethylene, as is usual in the solarization process, in accordance with the state of the art.
- Plot No. 2 was covered with a plastic sheet 40 micrometers thick manufactured with low density polyethylene containing 3% by weight sorbitol monostearate, in accordance with this present invention.
- Plot No. 3 was not covered and was used as a control.

The temperatures reached in the centre of each plot at depths of between 5 and 50 cm were taken continuously with appropriate electronic equipment.

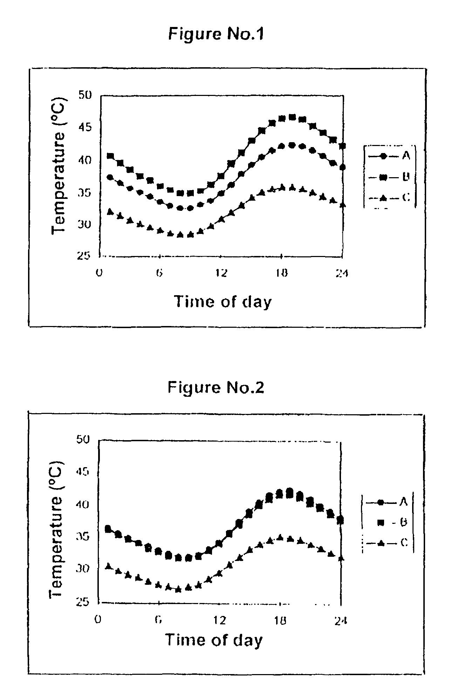

The results over the first 15 days of the experience showed that, at all times, the temperature in plot No. 2, solarized in accordance with the present invention, was greater than that of plot No. 1, and the latter was greater than that of plot No. 3, with differences oscillating between 1 and 5°C, depending on the depth and the time of day. The evolution of the temperature throughout a typical day is shown in figure No. 1. In this figure, curve "A" corresponds to the temperatures of plot No. 1, "B" to plot No. 2 and "C" to plot No. 3.

During the first 15 days of the experience, the underside of the sheet covering plot No. 1 was covered with spherical drops, while the sheet covering plot No. 2 was completely transparent, as the condensation occurred in the form of a continuous sheet. From this day on, the aspect of the two sheets was similar, both being covered with spherical drops, which shows that the hydrophilic effect of the surfactant had disappeared from the sheet of plot No. 2. Over the following days, the soil temperatures taken in plots 1 and 2 were practically the same, and greater than those of plot No. 3. The evolution of the temperature throughout a typical day during this period is shown in figure No. 2. In this figure, curve "A" corresponds to the temperatures of plot No. 1, "B" to plot No. 2 and "C" to plot No. 3.

This experience showed the positive effect of the sheet containing surfactant, as regards its capacity to increase soil temperature in the solarization process. It also showed that the increase of temperature is due to the condensation of the water vapour in a continuous sheet, instead of spherical drops, as in example No. 1.

### Example No. 3

A solarization experience was carried out on agricultural land over the months of July and August in the area of El Ejido (Almería). Three 24 m² plots were formed, representing the level of between 0 and 20cm depth. In each of them, the density of propagules of the pathogenic fungus Fusarium spp was taken, using appropriate cultures. Table No. 1 shows the variation of said density referring percentually to the initial density of each plot.

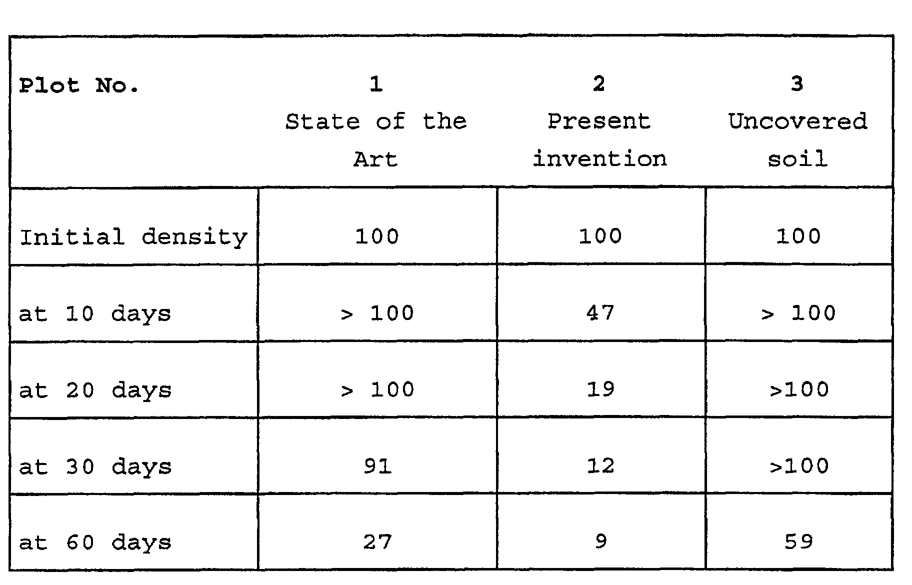

During the first 18 days of the experience and, as in example No. 2, the sheet covering plot No. 1 was covered with spherical drops, owing to the heavy condensation, while the sheet covering plot No. 2 was completely transparent, as the condensation occurred in a continuous sheet. After these 18 days, the appearance of the two sheets was similar, both being covered with spherical drops. The sheet covering plot No. 2, corresponding to this present invention, was then changed for another one identical to the one placed initially, and the experience continued.

This experience showed the greater efficacy of the sheet containing the surfactant, in accordance with this present invention, as regards its capacity of disinfecting the soil by means of the solarization process, although the duration of the hydrophilic effect was too tight, or insufficient, to complete the solarization cycle.

### Example No. 4

A solarization experience was carried out on laboratory scale, during the months of August and September. 4 30 x 30 cm containers were taken and filled with agricultural soil from the plot mentioned in example No. 2, watered to saturation and covered with sheets of low density polyethylene, each containing 3% by weight of sorbitol monostearate. Samples Nos. 2, 3 and 4 also contained 1% per weight of diatomite earth, natural silicates and silica amorphates, respectively. All of these micro-porous mineral products had a particle size of between 4 and 6 micrometers, a specific surface of 3, 10 and 300 m²/g respectively, and a pore volume measured by heptane absorption of 0.25, 1 and 4 cm³/g respectively.

The appearance of the films was observed daily, to verify the time which the hydrophilic effect of the surfactant took to disappear, showed in the change from condensation in the form of a continuous sheet to condensation in the form of spherical drops. In sample No. 1 this change was observed at 18 days, coinciding with the field experience of examples 2 and 3. Nevertheless, examples 2, 3 and 4, maintained the hydrophilic effect for between 50 and 80 days, sufficient to complete an efficient soil disinfection cycle by solarization.

This experience showed that micro-porous mineral loads delayed the migration and subsequent washing of the surfactant, increasing the duration of the hydrophilic effect of the sheet, enough to successfully complete a complete solarization cycle, as shown in the example, as follows.

### Example No. 5

A solarization experience was carried out in the area of El Ejido (Almeria, Southwest Spain) during the months of July and August, on a commercial 900 m² green house, divided into 9 elementary 10 x 10 m plots. In three of them each of the following 3 treatments was carried out:
- Treatment No. 1: solarization with low density polyethylene sheet 40 micrometers thick, habitually used in the solarization process, in accordance with the state of the art.
- Treatment No. 2: solarization with plastic sheet 40 micrometers thick, in accordance with this present invention, coinciding with sample No. 4 of example No. 4.
- Treatment No. 3: soil disinfection with the chemical pesticide methyl bromide, using a dose of 60 grams per m², in accordance with habitual practice in the area.
At 35 and 50 days of treatment, soil samples were taken, for which, from each of the elementary plots, 10 subsamples were taken, which were mixed until a good homogenisation was obtained and the phytoparasitic nematodes were analysed. The results showed that the plots with treatment No. 2, solarized in accordance with this present invention, and those corresponding to treatment No. 3, disinfected with chemical pesticide, were totally free of nematodes, while those which received treatment No. 1, solarized with the normal polyethylene film, in accordance with the state of the art, maintained 50% of the original population, in both periods at which the samples were taken.

In this experience it was observed that the hydrophilic effect of the surfactant remained intact during the whole solarization cycle.

These examples show the efficacy of the film of this present invention for soil disinfection by solarization, implying an important qualitative leap regarding the current state of the art, resolving the limiting problems of the use of the solarization technique for soil disinfection, described at the beginning of this present memory.

Having sufficiently described the nature of the invention, as well as the manner of carrying it out in practice, it must be stated that the above mentioned dispositions may be liable to modifications of details, whenever the fundamental principle is not affected.

## Claims

1. Transparent plastic sheet having an approximate thickness between 10 and 50 micrometers, to improve the efficacy of disinfection of agricultural soil by the solarization technique, **characterized by** incorporating into a plastic material, by molten mixture, between 0.1 and 5% by weight with respect to the plastic material, preferably, between 0.5 and 3%, of a non ionic surfactant selected from esters of fatty acids and polyols containing one or more non esterified or oxyalkylenated functional alcohol groups, thus giving it hydrophilic properties, permitting the water vapour to condense on its surface in the form of a continuous sheet instead of in spherical drops, thus permitting an increase in the transmission of solar energy and consequently of the temperature of the soil being disinfected, substantially improving the efficacy of the solarization, this being understood as a greater reduction of pathogenic germs in the same time, a reduction in the solarization time to obtain the same level of destruction of pathogenic germs or the possibility of using it on milder climates.

2. Transparent plastic sheet according to claim 1, **characterized in that** said plastic material is selected from polyethylene, copolymers of ethylene and vinyl acetate, copolymers of ethylene and alpha-olefins, and mixtures thereof.

3. Transparent plastic sheet according to claim 1, **characterized in that** said non ionic surfactant is selected from a sorbitol stearate, a glycerol stearate, an oxyethylenated ethylenglycol palmitate and mixtures thereof.

4. Transparent plastic sheet according to claim 1, further **characterized by** containing a micronized microporous mineral product selected from silica amorphates, diatomite earth, kaolin, natural silicates, alumina and sepiolite.

5. Transparent plastic sheet according to claim 4, **characterized in that** said micronized microporous mineral product has an average particle size between 1 and 10 micrometers approximately, a specific surface between 2 and 500 m²/g approximately, and a volume of pores, measured by heptane absorption, between 0.2 and 5 cm³/g approximately, in an amount comprised between 0.2 and 2 times, approximately, the amount of the non ionic surfactant.

6. Transparent plastic sheet according to claim 1, further **characterized by** containing one or more additives used in the manufacture of plastic films.

## Patentansprüche

1. Durchsichtige Kunststofffolie einer Dicke von ca. 10 bis 50 Mikrometern zur Verbesserung der Desinfektionsfähigkeit landwirtschaftlichen Bodens durch Solartechnik, **dadurch gekennzeichnet, dass** in das Kunststoffmaterial durch Schmelzmischung 0,1 bis 5 Gewichts-% in Bezug auf das Kunststoffmaterial, vorzugsweise 0,5 bis 3 % eines nicht ionischen Tensids, ausgewählt aus eine oder mehrere nicht veresterte oder oxyalkylenierte funktionelle Alkoholgruppen enthaltenden Fettsäureestern und Polyolen, eingebracht werden, wodurch dieser Folie hydrophile Eigenschaften verliehen werden und erreicht wird, dass der Wasserdampf auf ihrer Oberfläche in Form einer durchgehenden Folie anstelle kugelförmiger Tropfen verdunstet, wodurch eine Erhöhung der Übertragung der Sonnenenergie und in Folge dessen der Temperatur des zu desinfizierenden Bodens erreicht wird und die Wirksamkeit der Sonnenbestrahlung wesentlich verbessert wird, was eine stärkere Reduzierung der Krankheitserreger in der selben Zeit, eine Verringerung der Sonnenbestrahlungszeit um das gleiche Zerstörungsniveau der Krankheitserreger zu erreichen oder die Möglichkeit der Verwendung in milderem Klima bedeutet.

2. Durchsichtige Kunststofffolie nach Anspruch 1, **dadurch gekennzeichnet, dass** das genannte Kunststoffmaterial ausgewählt wird aus Polyethylen, Ethylen-Vinylacetat-Copolymeren, Ethylen-Alfaolefin-Copolymeren oder Mischungen derselben.

3. Durchsichtige Kunststofffolie nach Anspruch 1, **dadurch gekennzeichnet, dass** das genannte nicht ionische Tensid ausgewählt wird aus Sorbitolstearat, Glycerinstearat, oxyethyleniertem Ethylenglykolpalmitat oder Mischungen derselben.

4. Durchsichtige Kunststofffolie nach Anspruch 1, **dadurch gekennzeichnet, dass** sie ausserdem ein zerkleinertes mikroporöses Mineralprodukt enthält, das ausgewählt wird aus amorphem Kiesel, Diatomerde, Kaolin, natürlichen Silikaten, Tonerde und Sepiolith.

5. Durchsichtige Kunststofffolie nach Anspruch 4, **dadurch gekennzeichnet, dass** das genannte zerkleinerte, mikroporöse Mineralprodukt eine mittlere Teilchengrösse von ca. 1 bis 10 Mikrometern, eine spezifische Oberfläche von ca. 2 bis 500 m²/g, und ein durch Heptanabsorbierung gemessenes Porenvolumen von ca. 0,2 bis 5 cm³/g, in einer ca. 0,2 bis 2 mal so grossen Menge wie das nicht ionische Tensid aufweist.

6. Durchsichtige Kunststofffolie nach Anspruch 1, **dadurch gekennzeichnet, dass** sie ausserdem eine oder mehrere bei der Herstellung von Kunststofffilmen verwendete Zusatzstoffe enthält.

## Revendications

1. Lame transparente en plastique d'un épaisseur approximative entre 10 et 50 micromètres, pour améliorer l'efficacité de désinfection du sol agricole au moyen de la technique de solarisation, **caracterisée en ce qu'**elle incopore dans le matériel plastique, au moyen du mélange fondu, entre 0.1 et 5 % en poids par rapport au matériel plastique, de préférence, entre 0.5 et 3 %, d'un surfactant non ionique selectionné parmi des esters d'acides gras y des polyols qui contiennent un ou plusieurs groupes fonctionnels alcooliques non estérifiés ou oxyalkylénés, conférant ainsi à cette lame des propriétés hydrophiles, permettant que la vapeur d'eau se condense sur sa superficie en forme de lame continue au lieu de goutes sphériques, permettant ainsi un accroissement de la transmission d'énergie solaire et, en conséquence, de la température du sol qui est en procès de désinfection, en améliorant substanciellement l'efficacité de la solarisation, entendue celle-ci comme une plus grande diminution des germes pathogènes dans le même temps, une diminution du temps de solarisation pour obtenir le même niveau de destruction des germes patogènes ou la possibilité de l'employer dans des climats plus doux.

2. Lame transparente en plastique selon la revendication 1, **caractérisée en ce que** ledit matériel en plastique est selectionné parmi le polyéthylène, des copolymères d'éthylène et d'acétate de vinyle, des copolymères d'éthylène et d'alpha-oléfines, et des mélanges de ceux-ci.

3. Lame transparente en plastique selon la revendication 1, **caractérisée en ce que** ledit surfactant non ionique est selectionné parmi un stéarate de sorbitol, un stéarate de glycérine, un palmitate d'éthylèneglycol oxyéthyléné et des mélanges de ceux-ci.

4. Lame transparente en plastique selon la revendication 1, **caractérisée en ce que**, en outre, elle contient un produit minéral microporeux micronisé selectionné parmi le silice amorphe, la terre à diatomées, le kaolin, les silicates naturels, l'alumine et la sépiolite.

5. Lame transparente en plastique selon la revendication 1, **caractérisée en ce que** ledit produit minéral microporeux micronisé possède une dimension moyenne de particule approximative entre 1 et 10 micromètres, une superficie spécifique approximative entre 2 et 500 m²/g, et un volume approximatif de pores, mesuré par absortion d'heptane, entre 0.2 et 2 cm³/g, dans une quantité approximative entre 0.2 et 2 fois la cantité du surfactant non-ionique.

6. Lame transparente en plastique selon la revendication 1, **caractérisée en ce qu'**elle contient, en outre, un ou plusieurs additifs employés dans la fabrication de lames en plastique.
